# EUROPEAN PATENT APPLICATION

(11) **EP 4 282 579 A1**
(43) Date of publication of application: **29.11.2023**
(21) Application number: 23173156.3
(22) Date of filing: 12.05.2023
(51) Int. Cl.: B23Q 1/03, B23Q 3/08, B23Q 11/00

(54) **DEVICE FOR BLOCKING PIECES TO BE WORKED AND MACHINE TOOL INCORPORATING AT LEAST ONE SUCH DEVICE**

(30) Priority: 23.05.2022 IT 202200010616
(71) Applicant: SCM Group S.p.A., 47921 Rimini (RN) (IT)
(72) Inventor: VANNUCCI, Carlo, 47921 Rimini (RN) (IT); BIANCHI, Fabio, 47921 Rimini (RN) (IT); VILLA, Matteo, 47921 Rimini (RN) (IT)
(74) Representative: Tiburzi, Andrea

(57) **Abstract**

The present invention relates to a blocking device (5) for blocking panels or other workpieces, suitable for use in a working plane (3) of a machine tool (1) for machining panels or other workpieces, on the top of said blocking device (5) a top surface (12) being defined into which at least a first opening (13) leads, for the vacuum, connectable, in use, to means for generating the vacuum to allow, in use, the blocking of a panel or other workpiece on said blocking device (5) by means of the vacuum generated by said means for generating the vacuum at said top surface (12). In said top surface (12) flows at least a second opening (19) for compressed air flows into said top surface (12), which can be connected, in use, to a source of compressed air to allow, in use, removing dust and/or scraps and/or machining residues from at least one top area of said blocking device (5) expelling compressed air from said at least one second opening (19) at said top surface (12) through the use of said source of compressed air.

## Description

The present invention relates to a device for blocking pieces, in particular a device for blocking workpieces in a machine tool.

Specifically, this blocking device is particularly suitable for being mounted in work centers equipped with a worktable with bars.

Normally, this type of machining center comprises a work surface formed by a plurality of parallel bars, on which means are provided for blocking the pieces to be machined, and a longitudinally movable portal above these bars and carrying the operating means to carry out the operations foreseen on the pieces blocked on the same bars.

The invention proposed here also relates to a machine tool incorporating at least one such blocking device.

In the following, the description will be addressed to a machining center for machining panels in wood or other materials, but it is clear that the same should not be considered limited to this specific type of machine tool and this particular type of piece to be machined, since it can also be extended to other types of machine tools and to the machining of pieces having different compositions and shapes.

There are various work centers equipped with a respective work surface made up of transversal parallel bars and a respective mobile portal above the working plane according to the longitudinal axis of the machine and bearing one or more operating elements for machining the pieces.

These transversal bars are normally adjustable in position along the aforesaid longitudinal axis and are also provided with a multiplicity of members, designed to allow blocking of the pieces to be machined, said blocking members being also normally adjustable in position along the bar on which they are mounted.

The machining of the workpieces is performed due to the movements of the portal and of the relative operating members with respect to the piece placed on the working plane and blocked there by the blocking members.

Since normally these operating members are members that operate by material removal, it is inevitable that during the machining of the pieces, dust and machining scraps are deposited on the blocking members themselves.

Therefore, in machining centers, once the machining of each piece has been completed, it is necessary to carry out a cleaning operation of the relative blocking elements before starting a new working program on another piece, to allow the blocking elements to operate constantly an effective blocking action on the pieces to be machined.

Normally, in traditional machining centers, this cleaning operation is performed with the aid of cleaning means operated by an operator, or by a person.

In light of the above, it is, therefore, an object of the present invention to provide a device for blocking workpieces that is suitable for being mounted on machine tools and that is capable of carrying out cleaning operations on itself in an automated way, to remove all the dust and machining scraps.

Another object of the invention is to provide a device for blocking workpieces that is suitable for being mounted on machine tools, and which is capable of performing an effective cleaning action on itself.

A further object of the invention proposed here is to provide a device for blocking workpieces, which is suitable for being mounted on machine tools, and which is configured in such a way as to be able to perform a cleaning operation on itself by the equipment normally supplied with machine tools of this type.

Another object of the invention is to provide a device for blocking workpieces, which is suitable for being mounted on machine tools, and which is capable of operating an effective and safe blocking action on the pieces to be machined.

Another object of the present invention is to provide a device for blocking workpieces that is suitable for being mounted on machine tools and that has a relatively simple structure.

A further object of the present invention is to provide a machine tool equipped with a plurality of blocking devices according to the present invention.

It is therefore specific object of the present invention a blocking device for blocking panels or other workpieces, suitable for use in a working plane of a machine tool for machining panels or other workpieces, on the top of said blocking device a top surface being defined into which at least a first opening leads, for the vacuum, connectable, in use, to means for generating the vacuum to allow, in use, the blocking of a panel or other workpiece on said blocking device by means of the vacuum generated by said means for generating the vacuum at said top surface; at least a second opening for compressed air flows into said top surface, which can be connected, in use, to a source of compressed air to allow, in use, removing dust and/or scraps and/or machining residues from at least one top area of said blocking device expelling compressed air from said at least one second opening at said top surface through the use of said source of compressed air.

Preferably according to the invention, said blocking device comprises: a blocking member, in which said top surface is defined, at least a first passage for the vacuum leading into said at least a first opening, and at least a second passage, for the compressed air, in fluid communication with said at least one second opening; a support, in which a first channel is defined for the vacuum, which can be connected, in use, to means for generating the vacuum, and at least a second channel for compressed air, which can be connected, in use, to a source of compressed air; and coupling means for coupling said blocking member to said support, in such a way that said at least one first passage and said at least one second passage is in fluid communication, respectively, with said first channel and with said at least one second channel, when said blocking member and said support are mutually coupled.

Conveniently according to the invention, said blocking device may comprise at least one sealing element arranged in correspondence with said top surface.

Advantageously according to the invention, said blocking device may comprise a plurality of terminal blowing channels, opening into said top surface.

Preferably according to the invention, in said blocking member a bottom is defined, in a position opposite to said top surface, and said at least one second passage comprises an ascending section leading into said bottom.

Further according to the invention, said blocking device may comprise a circuit channel, in which said plurality of terminal blowing channels is engaged.

Preferably according to the invention, said at least one sealing element may be is arranged in correspondence with a perimeter portion of said top surface, and in that said circuit channel is arranged inside said at least one sealing element.

Further according to the invention, said circuit channel and said at least one sealing element may have substantially the same shape.

It is further object of the present invention a machine tool to perform at least one machining on a panel or another piece, said machine tool comprising: a working plane to allow, in use, the support and the blocking of at least one panel or another piece, said working plane comprising at least one oblong element and at least one blocking device according to any one of the preceding claims, movably coupled to said at least one oblong element; and operating means for performing at least one machining on a panel or other piece arranged on said working plane.

Preferably according to the invention, said machine tool may comprise a base, on which said working plane is provided, and in that said working plane comprises a plurality of oblong elements connected to said base in a movable way along a first axis and a plurality of blocking devices coupled to said plurality of oblong elements, in movable mode along a second axis, substantially orthogonal to said first axis.

The present invention will be now described, for illustrative but not limitative purposes, according to its preferred embodiments, with particular reference to the figures of the enclosed drawings, wherein:

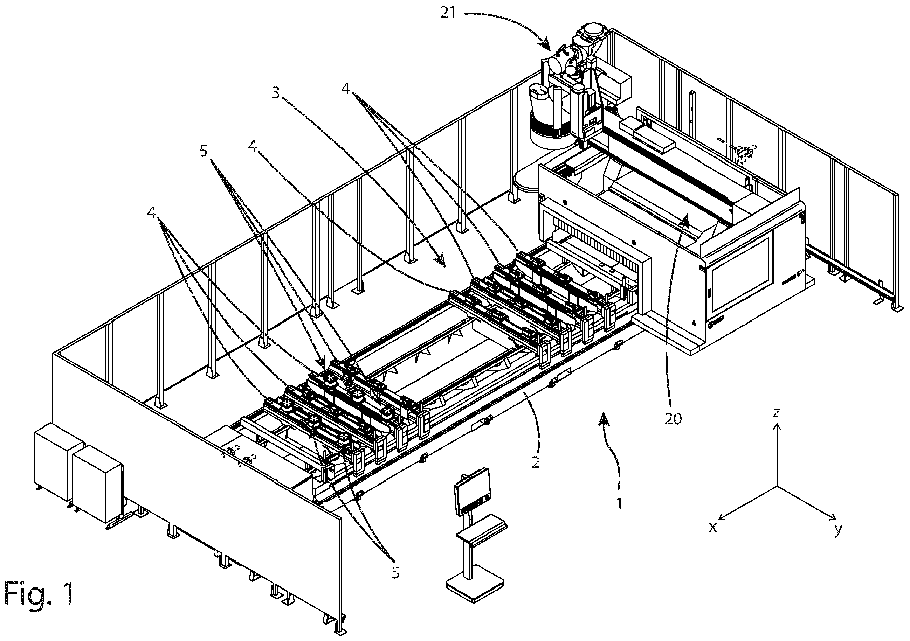

figure 1 is an axonometric view where a machine tool according to the present invention is represented as a whole;

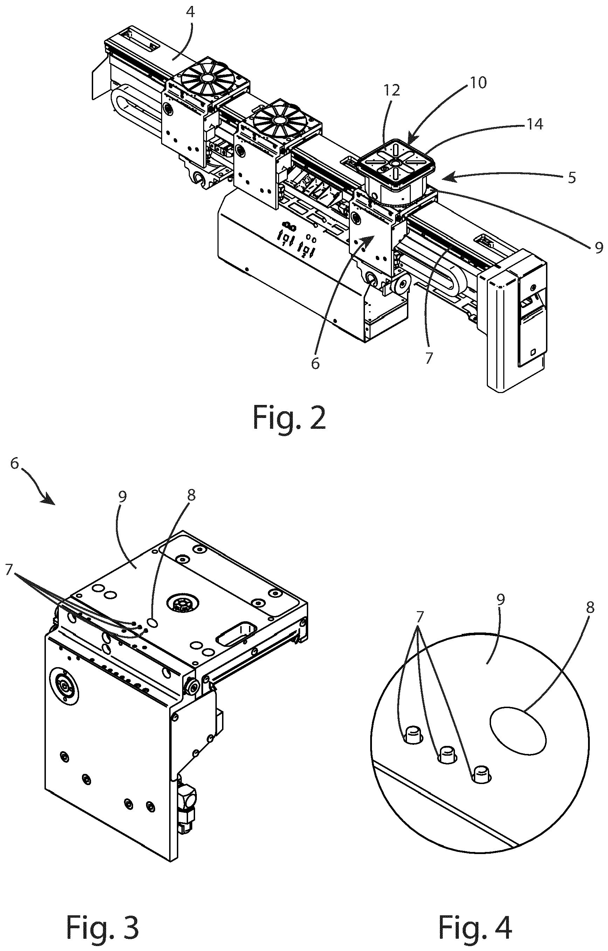

figure 2 is an axonometric view showing an assembly forming part of the machine tool represented in figure 1 and comprising a piece blocking unit;
figure 3 is an isometric view of a movable support forming part of the workpiece blocking unit illustrated in figure 2;
figure 4 is a detail view extracted from figure 3;

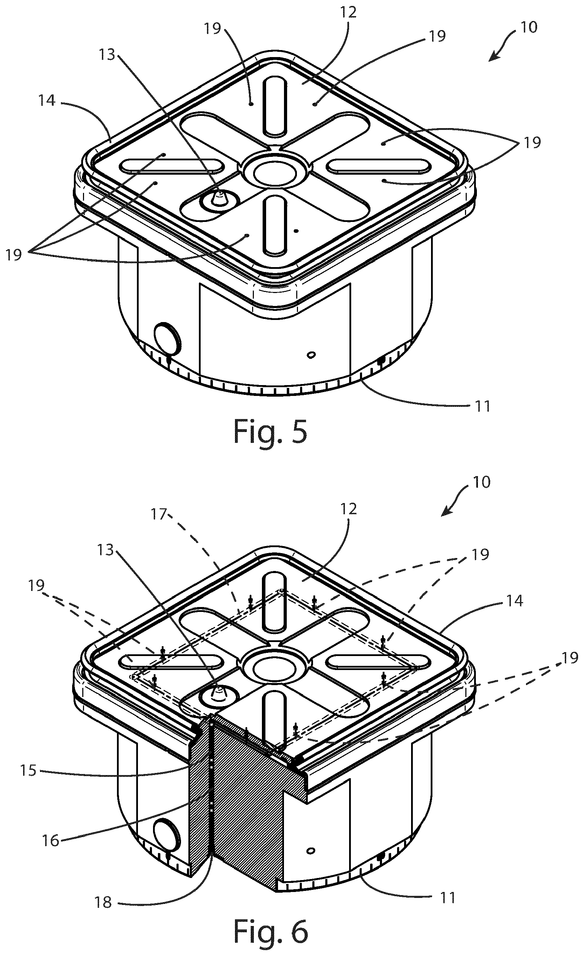

figure 5 is an axonometric view of a device for blocking pieces according to the present invention, forming part of the aforesaid group shown in figure 2; and
figure 6 is an axonometric cross-section of the piece blocking device shown in figure 5.

With reference to the enclosed figures, 1 indicates as a whole a machine tool, according to the present invention, for machining panels (not shown) made of wood or other materials.

This machine tool 1 comprises a base 2, extending according to a first axis X, on which a working plane 3 is provided which, specifically, is composed of a plurality of transversal bars 4 directed parallel to a second axis Y, orthogonal to the first axis X.

In particular, each transversal bar 4 is mounted on the base 2 in a movable manner according to the first axis X, so as to be able to adjust its position along the same axis.

On each transversal bar 4, there are provided one or more blocking units 5 individually movable along the relative transversal bar 4, and assigned to operate the blocking of one or more panels (not shown) to be machined on the working plane 3.

Each blocking unit 5 comprises, in turn, a lower support 6, i.e. a base, substantially having an inverted "L" shape and movable along the transversal bar 4 on which it is mounted, i.e. according to the aforesaid second axis Y through dedicated handling means and guides 7 made at the lateral edges of this transversal bar 4.

In each lower support 6 there are obtained a plurality of channels for the supply of compressed air 7, in particular three, and a channel for the supply of vacuum 8, all opening onto the top surface 9 of the lower support 6.

Furthermore, each compressed air supply channel 7 is connected to a compressed air system to selectively introduce compressed air into the same compressed air supply channel 7.

The aforesaid vacuum adduction channel 8 is instead put in fluid communication with a vacuum generation system capable, in fact, of determining a vacuum condition in this vacuum adduction channel 8 when necessary or when needs to block a panel on the working plane 3.

Each blocking unit 5 also includes a respective blocking device 10 that can be coupled, in a removable way, to the upper part of a lower support 6.

At the bottom 11 of each blocking device 10 and/or at the top surface 9 of each lower support 6, respective connection means are provided, which are configured to precisely make this removable coupling possible.

In each blocking device 10 a first passage (not shown) is formed, i.e., a first channel for the passage of the vacuum, extending between the bottom 11 and the substantially flat top surface 12 of the same blocking device 10, and opening at this last through an output member 13.

Furthermore, this first passage is shaped in such a way that the relative lower opening (not shown) provided on the bottom 11 of the blocking device 10 substantially coincides with the outlet opening of the channel for feeding the vacuum 8 of a lower support 6 on the relative top surface 9, when said blocking device 10 and said lower support 6 are mutually coupled by means of the aforementioned connection means.

In the blocking device 10, a closing member or mechanism (not shown) can also be provided to selectively interrupt the passage of the vacuum in the aforementioned first passage when the aforementioned system for generating the vacuum is active.

On the top part of each blocking device 10 is fitted an elastic gasket 14, i.e., a sealing element, arranged around the relative top surface 12 in such a way as to embrace it entirely and operate, jointly with the latter, like a suction cup when it is placed the activation of the vacuum in the aforementioned first step.

Therefore, by resting the panel to be worked on a certain number of blocking units 5, previously positioned in a suitable way to support it effectively, and by activating the vacuum generation system with the aforementioned closing member or mechanism deactivated, the effect will be obtained by blocking the panel thanks to the attraction force exerted on the latter by the vacuum generated in the space inside the elastic gasket 14.

In the specific embodiment of the invention shown in the attached figures, the elastic gasket 14 has a substantially square shape; however, this elastic gasket 14 can also assume other shapes, such as for example a rectangular, circular, hexagonal, or other shape.

In each blocking device 10 there is also formed a second passage 15 or a second channel composed of a relative vertical section 16, which flows into the bottom of the bottom 11, and an upper circuit 17, onto which the upper end of said vertical section 16 engages.

In particular, the vertical portion 16 of the second passage 15 flows into the bottom 11 of the blocking device 10 through a lower opening 18 placed in a position such as to substantially coincide with the outlet opening of one of the aforementioned channels for the supply of compressed air 7 to the top surface 9 of a lower support 6 when said blocking device 10 is coupled to the latter by means of the aforementioned connection means.

In the specific embodiment of the invention shown in the attached figures, the upper circuit 17 of the second passage 15 has a substantially square shape; however, this upper circuit 17 could also assume other shapes, such as for example a rectangular, circular, hexagonal, or other shape.

The second passage 15 also comprises a plurality of terminal blowing channels 19 (precisely eight) which engage, below, with the upper circuit 17 and which open, above, onto the top surface 12 of the blocking device 10.

More specifically, two terminal blowing channels 19 are engaged on each side of the upper circuit 17, so that the aforementioned plurality of terminal blowing channels 19 is substantially uniformly distributed along the entire length of the upper circuit 17.

Therefore, when the aforesaid compressed air system is activated, jets of compressed air directed upwards come out of the plurality of terminal blowing channels 19, which perform the function of removing from the top area of each blocking device 10 the dust, shavings, and scraps resulting from the machining of the panels.

According to a further embodiment of the present invention, not shown in the attached figures, the blocking device 10 is formed in a single piece with the relative lower support 6, in such a way that the aforementioned first channel for the passage of the vacuum is in fluid communication with the vacuum adduction channel 8, and that the lower opening 18 substantially matches the outlet opening of one of the compressed air adduction channels 7; clearly, in this case, the aforesaid connection means are not provided as they are not necessary.

The machine tool 1 also comprises a portal 20 movable along the first axis X and carrying at least one movable operating member 21 to perform at least one machining operation on a panel blocked on the working plane 3.

In particular, this operating member 21 can be movable along the first X axis and/or the second Y axis and/or a third Z axis, orthogonal to the first X and second Y axis, and/or other axes.

For the use of the machine tool 1 described above, it is first of all necessary to block the panel to be worked on the working plane 3 by resting the same panel on a certain number of blocking units 5 (specifically, on the top part of the relative blocking devices 10) suitably positioned according to the shape of the panel and the working program to be performed, and then arranging the blocking of the panel by activating the vacuum generation system.

Once the blocking of the panel to be machined has been achieved, the work program is started or the execution of the operations foreseen on the panel is arranged by the operating member 21 causing the latter and the portal 20 to move with respect to the panel itself.

The execution of workings for the removal of material on the panel inevitably leads to the formation of dust and scraps and to their deposit also on the top area of the blocking devices 10 used to block the panel.

It is evident that in order to proceed with the subsequent machining of a further panel, it is first necessary to provide for the removal of such dust and scraps to allow the blocking units 5 to effectively operate the blocking of this further panel by means of the vacuum.

In the machine tool 1 according to the present invention, this dust and scraps removal is effectively and automatically performed by arranging the exit of jets of compressed air from the terminal blowing channels 19 of the locking devices 10, which jets of compressed air will blow away the dust and shavings, completely freeing the top area of the blocking devices 10 from them.

This method of carrying out the cleaning of the blocking devices 10 (i.e., the members which are in contact with the pieces to be machined) is extremely quick and effective; this translates, in operational terms, into increased productivity of the machine tool and into a higher quality in the execution of the workings due to the high stability of the blocked piece.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Blocking device (5) for blocking panels or other workpieces, suitable for use in a working plane (3) of a machine tool (1) for machining panels or other workpieces, on the top of said blocking device (5) a top surface (12) being defined into which at least a first opening (13) leads, for the vacuum, connectable, in use, to means for generating the vacuum to allow, in use, the blocking of a panel or other workpiece on said blocking device (5) by means of the vacuum generated by said means for generating the vacuum at said top surface (12);
**characterized in that** at least a second opening (19) for compressed air flows into said top surface (12), which can be connected, in use, to a source of compressed air to allow, in use, removing dust and/or scraps and/or machining residues from at least one top area of said blocking device (5) expelling compressed air from said at least one second opening (19) at said top surface (12) through the use of said source of compressed air.

2. Blocking device (5) according to claim 1, **characterized in that** it comprises:
a blocking member (10), in which said top surface (12) is defined, at least a first passage for the vacuum leading into said at least a first opening (13), and at least a second passage (15), for the compressed air, in fluid communication with said at least one second opening (19);
a support (6), in which a first channel (8) is defined for the vacuum, which can be connected, in use, to means for generating the vacuum, and at least a second channel (7) for compressed air, which can be connected, in use, to a source of compressed air; and
coupling means for coupling said blocking member (10) to said support (6), in such a way that said at least one first passage and said at least one second passage (15) is in fluid communication, respectively, with said first channel (8) and with said at least one second channel (7), when said blocking member (10) and said support (6) are mutually coupled.

3. Blocking device (5) according to any one of claims 1 or 2, **characterized in that** it comprises at least one sealing element (14) arranged in correspondence with said top surface (12).

4. Blocking device (5) according to any one of the preceding claims, **characterized in that** it comprises a plurality of terminal blowing channels (19), opening into said top surface (12).

5. Blocking device (5) according to claim 2, **characterized in that** in said blocking member (10) a bottom (11) is defined, in a position opposite to said top surface (12), and **in that** said at least one second passage (15) comprises an ascending section (16) leading into said bottom (11).

6. Blocking device (5) according to claim 4, **characterized in that** it comprises a circuit channel (17), in which said plurality of terminal blowing channels (19) is engaged.

7. Blocking device (5) according to claims 3 and 6, **characterized in that** said at least one sealing element (14) is arranged in correspondence with a perimeter portion of said top surface (12), and **in that** said circuit channel (17) is arranged inside said at least one sealing element (14).

8. Blocking device (5) according to claims 3 and 6, **characterized in that** said circuit channel (17) and said at least one sealing element (14) has substantially the same shape.

9. Machine tool (1) to perform at least one machining on a panel or another piece, said machine tool (1) comprising:
a working plane (3) to allow, in use, the support and the blocking of at least one panel or another piece, said working plane (3) comprising at least one oblong element (4) and at least one blocking device (5) according to any one of the preceding claims, movably coupled to said at least one oblong element (4); and
operating means (21) for performing at least one machining on a panel or other piece arranged on said working plane (3).

10. Machine tool (1) according to claim 9, **characterized in that** it comprises a base (2), on which said working plane (3) is provided, and **in that** said working plane (3) comprises a plurality of oblong elements (4) connected to said base (2) in a movable way along a first axis (X) and a plurality of blocking devices (5) according to any one of claims 1 to 8 coupled to said plurality of oblong elements (4), in movable mode along a second axis (Y), substantially orthogonal to said first axis (X).
